# EUROPÄISCHE PATENTSCHRIFT

(11) **EP 2 183 518 B1**
(45) Veröffentlichungstag und Bekanntmachung des Hinweises auf die Patenterteilung: **26.10.2011**
(21) Anmeldenummer: 08801514.4
(22) Anmeldetag: 02.08.2008
(51) Int. Cl.: F16L 37/091, F16L 37/12, F16L 55/115

(54) **SCHUTZKAPPE FÜR EINEN STECKFITTING**
PROTECTIVE CAP FOR A PLUG FITTING
COIFFE DE PROTECTION POUR UN RACCORD A FICHE

(30) Priorität: 06.08.2007 DE 102007037005
(43) Veröffentlichungstag der Anmeldung: 12.05.2010
(73) Patentinhaber: HENCO Industries NV, 2200 Herentals (BE)
(72) Erfinder: HENDRICKX, Willy, B-2200 Herentals (BE)
(74) Vertreter: Starke, Günter
(86) Internationale Anmeldenummer: PCT/EP2008/006399
(87) Internationale Veröffentlichungsnummer: WO 2009/018985

(56) Entgegenhaltungen:
- DE-U1- 29 609 435
- NL-C2- 1 019 377
- US-A- 6 003 557
- US-A1- 2005 236 596

## Beschreibung

Die Erfindung betrifft einen Steckfitting mit einem Grundkörper und einer Schutzkappe, der anschließend an ein Mittelteil einen Einsteckbereich aufweist, wobei der Einsteckbereich einen Grundkörper mit einem inneren Rohrträger und eine mit dem Grundkörper zusammenwirkende Hülse aufweist, wobei der Rohrträger und die Hülse einen Ringraum bilden, in den ein in der Hülse von einem Spannring gehaltener Klemmring hineinragt.

Ein derartiger Steckfitting ist aus der NL 101 93 77 C2 bekannt. Dieser Steckfitting weist einen Einsteckbereich und einen Anschlussbereich auf, wobei in den Einsteckbereich ein Rohr eingeschoben werden kann, dass dann von einem Klemmring gehalten wird. Dieser Klemmring ist in einer metallischen Hülse vorzugsweise durch plastische Verformung festgelegt. Die Hülse selber ist ebenfalls durch eine plastische Verformung auf einer Schulter des Grundkörpers festgelegt. Das in den Einsteckbereich eingeschobene Rohr ist dann unlösbar mit dem Steckfitting verbunden. Der Grundkörper ist aus einem Material gefertigt, dass eine Isolierung durch eine Isolierscheibe gegenüber dem in den Einsteckbereich eingeschobenen Rohr notwendig macht.

Der Erfindung liegt die Aufgabe zugrunde, einen Steckfitting mit einem Grundkörper und einer Schutzkappe bereitzustellen, der eine hohe Montagesicherheit bietet und dabei problemlos zu handhaben ist.

Diese Aufgabe wird dadurch gelöst, dass auf das von dem Mittelteil wegweisende freie Ende des Einsteckbereichs eine Schutzkappe aufsetzbar ist und dass die Schutzkappe dichtend und kontaktfrei zu dem Klemmring in den Ringraum eingreift. Mit dieser aufgesetzten Schutzkappe wird jeder Steckfitting von dem Hersteller ausgeliefert. Damit ist sichergestellt, dass bis zur Entfernung der Schutzkappe zur Montage des Steckfittings keine Verunreinigungen, insbesondere Schmutz, in den Einsteckbereich hineingelangen können. Der Steckfitting wird insbesondere im Bereich der Sanitärinstallation und des Heizungsbaus eingesetzt und ist folglich im rauen Baustellenbetrieb einer erhöhten Verschmutzungsgefahr ausgesetzt. Gelangt in den - ohne eine Schutzkappe ausgeschützten - Ringraum Schmutz, ist die Montagesicherheit eines solchen Steckfittings nicht gewährleistet. So kann ein in den Ringraum eingestecktes Rohr, insbesondere ein Kunststoff-Metall-Kunststoff-Verbundrohr, oder ein eingestecktes sonstiges Bauteil, beispielsweise ein Fitting oder ein weiterer Steckfitting unter Umständen nicht so in den Ringraum eingesteckt werden, das ein sicherer Halt des eingesteckten Rohrs oder Bauteils in dem Steckfitting gewährleistet ist. Genauso unakzeptabel ist es, wenn durch Schmutz keine flüssigkeitsdichte Verbindung zwischen dem Steckfitting und dem Rohr beziehungsweise dem Bauteil gewährleistet ist. Durch die erfindungsgemäße Schutzkappe, die erst direkt vor der Verarbeitung also Montage des Steckfittings entfernt werden soll sind solche Montageunsicherheiten ausgeschlossen. Die Schutzkappe ist zumindest kraftschlüssig mit dem Steckfitting verbunden, so dass ein Schutz gegen eine unbeabsichtigte Entfernung gegeben ist. Wichtig ist aber, dass der in den Ringraum eingreifende Teil der Schutzkappe kontaktfrei zu dem Klemmring ist. Nur so ist es möglich die Schutzkappe ohne Zerlegung des Steckfittings zu demontieren. Eine zerstörungsfreie Zerlegung ist zwar ausdrücklich möglich und vorgesehen, würde aber zur Demontage der Schutzkappe einen unverhältnismäßigen und auch überflüssigen Aufwand darstellen.

In Weiterbildung der Erfindung ist die Schutzkappe mit einer Halteklammer an dem Spannring festlegbar. Die Halteklammer ist von Hand oder mit Hilfe eines Werkzeugs, beispielsweise eines Schraubendrehers, problemlos entfernbar, so dass somit kein erhöhter Montageaufwand entsteht. Andererseits ist durch die Halteklammer sichergestellt, dass in jedem Falle ein unbeabsichtigtes Lösen der Schutzkappe von dem Steckfitting vermieden wird.

In weiterer Ausgestaltung weist die Schutzkappe zwei gegenüberliegende parallel zueinander verlaufende Längsausnehmungen auf. Wiederum in weiterer Ausgestaltung ist eine u-förmig ausgebildete Halteklammer vorgesehen, deren gegenüberliegende Arme in die Längsausnehmungen einschiebbar sind und deren Arme im eingeschobenen Zustand gleichzeitig in eine ringförmige Außenringnut des Klemmrings eingreifen. Durch diese Ausgestaltung ist eine besonders zuverlässige, aber gleichzeitig auch handhabungsfreundliche Sicherung der Schutzkappe gewährleistet. Da an die Schutzkappe keine besonderen Anforderungen beispielweise zur Dauerhaltbarkeit gestellt sind, kann diese aus einem einfachen preiswerten Kunststoffmaterial hergestellt sein. Gleiches gilt für die Halteklammer, die aber auch aus einem vorzugsweise nicht rostendem Metall hergestellt sein kann. Natürlich ist es aber auch denkbar, beide Bauteile aus dem gleichen Kunststoff, nämlich insbesondere Polyvinylidenflurid, aus dem das Mittelteil, der Grundkörper des Einsteckbereichs mit dem inneren Rohrträger, die mit dem Grundkörper zusammenwirkende Hülse und der mit der Hülse verbundene Spannring des Steckfittings bestehen, herzustellen. Der Werkstoff Polyvinylidenflurid hat sich als besonders geeignet für die Herstellung eines solchen Steckfittings erwiesen. Der Werkstoff weist eine gute Temperaturbeständigkeit und gute Alterungsbeständigkeit auf. Weiterhin tritt keine Korrosion an den Kontaktstellen mit einem vorzugsweise als Kunststoff-Metall-Kunststoff-Verbundrohr hergestellten Rohr auf, so dass eine spezielle Isolierung nicht nötig ist.

In Weiterbildung weist der Steckfitting auf einer dem Einsteckbereich gegenüberliegenden Seite einen weiteren Einsteckbereich oder einen Anschlussbereich auf. Der Steckfitting is also in allen denkbaren Ausführungen darstellbar. Weist der Steckfitting einen zweiten Einsteckbereich auf, ist dieser selbstverständlich auch mit einer Schutzkappe versehen.

In weiterer Ausgestaltung der Erfindung weist der Anschlussbereich einen mit dem Ringraum korrespondierenden Rohrabschnitt auf. Dabei weist dann wiederum in weiter Ausgestaltung der Rohrabschnitt eine äußere Riffelung auf. Der solcherart ausgestaltete Steckfitting kann mit einem beliebig ausgestalteten weiteren Steckfitting verbunden werden, indem der Rohrabschnitt in den Ringraum des weiteren Steckfittings eingestellt wird. Die Riffelung gewährleistet einen sicheren Halt, indem die Haltezähne des Klemmrings in diese Riffelung eingreifen. Auch dieser Steckfitting kann beliebig ausgebildet sein, beispielsweise als Bogen, T-Stück oder Übergangsstück zu anderen Durchmessern.

Im übrigen ist der vorzugsweise aus einem metallischen Werkstoff gefertigte Klemmring scheibenförmig mit nach innen weisenden Haltezähnen ausgebildet. Diese Ausbildung ermöglicht eine unkomplizierte Herstellung durch beispielsweise Ausstanzen aus einer Metallplatte. Die Haltezähne können auf der später mit dem Rohr zusammenwirkenden Seite gebogen oder gerade ausgebildet sein. Sind sie gebogen ausgebildet, kann die Bogenform der Kontur des Rohrs folgen oder entgegengesetzt ausgerichtet sein. Bevorzugt sind die Haltezähne gegenüber dem scheibenförmigen Teil des Klemmrings abgewinkelt. Der Winkel beträgt dabei zwischen 10 Grad bis 80 Grad, vorzugsweise 30 Grad bis 50 Grad. Montiert wird der so ausgebildete Klemmring in der Form, dass die abgewinkelten Haltezähne zu dem Bund beziehungsweise dem Anschlussbereich des Steckfittings weisen. Ein Einschieben des Rohrs ist unter gegebenenfalls einer geringfügigen weiteren Aufbiegung des Haltezähne problemlos möglich, während bei einer Zugbelastung des Rohrs die Haltezähne in die äußere Schicht des Rohrs eingreifen. Damit die Haltezähne auch bei einer hohen von dem Verbundrohr ausgeübten Zugkraft nicht in Richtung zu dem Spannring umknicken können, ist eine Stützscheibe vorgesehen, die zusätzlich montierbar ist. Die Stützscheibe weist die gleiche Abwinklung wie der Klemmring auf. Dabei erstreckt sich die Stützscheibe über die Abwinklung des Klemmrings hinaus bis etwa beispielsweise zu der halben Länge der Haltezähne. Der Klemmring sowie gegebenenfalls die Stützscheibe können auch einstückig aus einem metallischen Werkstoff, wie beispielsweise Edelstahl, Kupfer, Messing oder Aluminium gefertigt. Diese Werkstoffe sind einerseits korrosionsbeständig und weisen andererseits eine hohe Festigkeit auf.

In Weiterbildung der Erfindung weist der Anschlussbereich einen metallischen Anschlusskörper mit einem Innengewinde oder Außengewinde auf. Diese Variante des Steckfittings dient insbesondere zum Herstellen von Schraubverbindungen nicht anderen Komponenten, wie beispielsweise Eckhähnen zum Anschluss von Wasserauslaufarmaturen. Ein solcherart ausgestalteter Steckfitting vereint die jeweiligen Vorteile eines insgesamt aus Metall und eines insgesamt aus Kunststoff gefertigte Steckfittings. Der aus Metall gefertigte Steckfitting ist bestens geeignet zum Herstellen von Schraubverbindungen und der aus Kunststoff gefertigte Steckfitting ist besonders geeignet zum Herstellen von Steckverbindungen. Bevorzugt ist der Steckfitting an das Anschlussstück angespritzt. Das Anschlussstück ist dazu in einer passenden Halterung gehalten, die gleichzeitig die Form für den Grundkörper des Steckfittings darstellt. In diese Form wird dann das Polyvinylidenflurid eingespritzt. Dabei weist das Anschlussstück umlaufende Verzahnungen auf. Dadurch wird eine besonders innige Verbindung mit dem Polyvinylidenflurid hergestellt. Dieser so hergestellte Steckfitting kann nur zerstörend in das Anschlussstück und den Einsteckbereich getrennt werden. Das Anschlussstück kann darüber hinaus eine äußere vielkantige Oberfläche aufweisen, auf die ein geeigneter Schraubschlüssel aufgesetzt werden kann. Damit wirken beim Herstellen einer Schraubverbindung mit einem anderen Bauteil keine die Verbindung des Anschlussstücks mit dem Grundkörper belastende Kräfte auf den Steckfitting ein. Es ist aber für die Bereitstellung eines besonders kompakten Steckfittings bevorzugt vorgesehen, eine äußere vielkantige Oberfläche im Bereich des das Anschlussstück umgebenden Kunststoffs anzuordnen. Auch bei dieser Ausgestaltung wirken keine oder nur geringe die Verbindung des Anschlussstücks mit dem Grundkörper belastende Kräfte auf den Steckfitting ein.

Weitere vorteilhafte Ausgestaltungen der Erfindung sind der Zeichnungsbeschreibung zu entnehmen, in der in den Figuren dargestellte Ausführungsbeispiele näher beschrieben sind.

Es zeigen:
- Fig. 1:: eine teilweise Schnittdarstellung einer Steckverbindung mit zwei Steckfittingen,
- Fig. 2: eine teilweise Schnittdarstellung des Einsteckbereichs des Steckfittings mit aufgesetzter Schutzkappe und
- Fit. 3: zwei Ansichten einer Halteklammer zur Befestigung der Schutzkappe

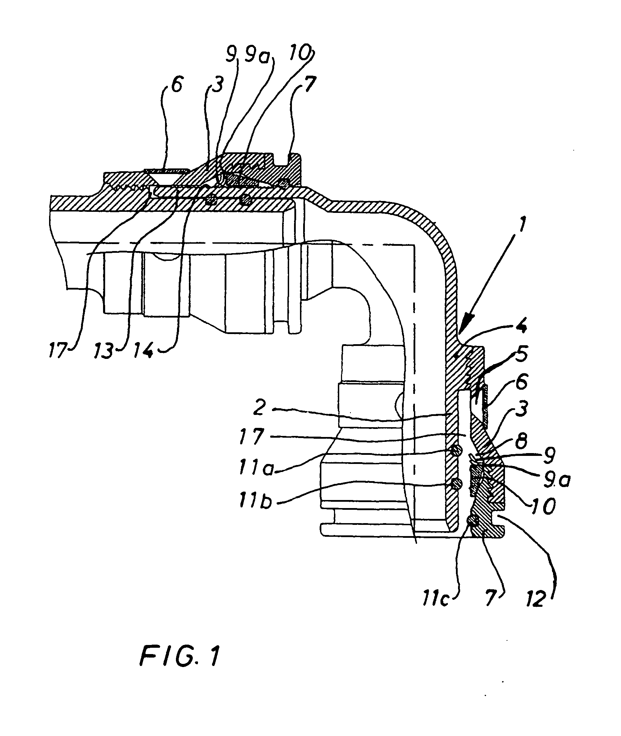

Die in Fig. 1 dargestellte Steckverbindung mit zwei Steckfittingen wird im Sanitärinstallationsbereich und im Heizungsbau verwendet. Insbesondere werden mit derartigen Steckfittingen Wasserleitungen oder Heizungsleitungen beispielsweise untereinander, mit Bogen oder Verbindungsstücken, mit den entsprechenden Anschlussstücken für beispielsweise Zapfstellen oder dergleichen verbunden. Die erfindungsgemäßen Steckfittinge können dabei in allen handelsüblichen Größen, insbesondere Durchmessern, und Ausführungen, beispielsweise als Winkelstück oder dreifach Anschlussstück, gefertigt werden. In dem Ausführungsbeispiel gemäß Figur 1 ist von dem linken Steckfitting im Wesentlichen nur ein Einsteckbereich dargestellt, in den ein später erläuterter Rohrabschnitt 13 eines als Bogenfitting ausgebildeten zweiten Steckfittings eingesteckt ist.

Die Steckfittinge gemäß Fig. 1 weisen jeweils einen Grundkörper 1 auf, der bevorzugt aus Polyvinylidenflurid (P.V.D.F) gefertigt ist. Dieser Grundkörper 1 weist den Einsteckbereich mit einem inneren Rohrträger 2 für eine Verbindung mit einem Rohr oder wie in Figur 1 dargestellt dem Rohrabschnitt 13 des weiteren Steckfitting auf. Ein solches Rohr ist insbesondere ein Verbundrohr, das aus einer inneren Kunststoffschicht, einer Metalltragschicht (bevorzugt aus Aluminium) und einer äußeren Kunststoffschicht besteht.

Auf den Grundkörper 1 ist eine Hülse 3 aufgesetzt und im Bereich eines Mittelteils 4 mit dem Grundkörper 1 verschraubt. Diese Verbindung ist lösbar, um beispielsweise einen defekten später genannten Runddichtring austauschen zu können.

Die Hülse 3 bildet zusammen mit dem inneren Rohrträger 2 einen Ringraum 17 zur Aufnahme des Rohrs oder einem damit korrespondierenden Rohrabschnitt 13 des weiteren Steckfittings. Dieser Rohrabschnitt 13 ist in dem Ausführungsbeispiel bis an einen Bund des Mittelteils 4 in den Ringraum 17 eingeschoben. Dieser Vorgang des Einschiebens ist durch eine Kontrollöffnung 5 kontrollierbar, dass heißt, wenn der Rohrabschnitt 13 an dem Bund anliegt, ist der Rohrabschnitt 13 durch die daneben liegende Kontrollöffnung 5 sichtbar. Mehrere auf dem Umfang der Hülse 3 verteilt angeordnete Kontrollöffnungen 5 sind durch einen durchsichtigen Schutzring 6, der mit der Hülse dicht verbunden ist, abgedeckt. Endseitig ist in die Hülse 3 ein Spannring 7 eingeschraubt. Der Spannring 7 und die Hülse 3 bildeten eine trapezförmige Ausnehmung 8. In diese trapezförmige Ausnehmung 8 ist ein Klemmring 9 zusammen mit einer Stützscheibe 9a sowie eine Kegelringhülse 10 eingesetzt. Der Spannring 7 weist stirnseitig bevorzugt drei Ausnehmungen auf, in die ein Werkzeug einsetzbar ist. Mit diesem Werkzeug kann der Spannring 7 in die Hülse 3 eingeschraubt werden und auch wieder heraus geschraubt werden. Somit ist es möglich, den Rohrabschnitt 13 zerstörungsfrei von dem linken Steckfitting zu lösten.

Im übrigen kann in dem Teil der Ausnehmung 8, der in der Hülse 3 liegt, eine Anlageschulter für eine exakte Positionierung des Klemmrings 9 angebracht sein. Der in dem Spannring 7 befindliche Bereich der Ausnehmung 8 weist eine Oberflächenkontur auf, die je eine ringförmige Anlagefläche mit der Kegelringhülse 10 im Bereich von deren Endbereichen herstellt. Die Kegelringhülse 10 weist in dem zu dem Spannring 7 weisenden Bereich eine Verzahnung auf. Weiterhin weist die Kegelringhülse 10 auf der mit dem Rohrabschnitt 13 zusammenwirkenden Seite Zähne auf. Schließlich weist die Kegelringhülse 10 einen die Kegelringhülse 10 auftrennenden Spalt und/oder biegeelastische Bereiche auf. Mit diesen zusammenwirkenden Ausgestaltungen wird folgendes erreicht. Wenn ein Rohr oder in dem Ausführungsbeispiel der Rohrabschnitt 13 des zweiten Steckfittings wechselweise von kalten oder warmen Wasser durchströmt wird, (beispielsweise bei Verwendung in einer Fußbodenheizung, hervorgerufen durch die Temperaturregelung) dehnt sich das Rohr oder der Rohrabschnitt 13 bei warmem Wasser in Längsrichtung und schrumpft entsprechend bei kaltem Wasser. Diese Bewegungen üben eine Wechselbelastung auf den Klemmring 9 aus, die durch das Zusammenwirken der Kegelringausnehmung mit der Kegelringhülse 10 und dem Rohr oder dem Rohrabschnitt 13 zumindest stark verringert wird. Bei abkühlenden Wasser übt das Rohr oder der Rohrabschnitt 13 über den in das Rohr oder den Rohrabschnitt 13 eingreifenden Klemmring 9 eine Kraft auf die Kegelringhülse 10 in Richtung zu dem freien Ende des Klemmrings 9 aus. Da die Kegelringhülse 10 durch die Kegelform und die mit dem Klemmring 9 zusammenwirkende Verzahnung im wesentlichen nur in Richtung zu dem Rohr oder dem Rohrabschnitt 13 ausweichen kann, greift sie mit den Zähnen in das Rohr oder den Rohrabschnitt 13 ein und verhindert eine Schrumpfung des Rohrs oder des Rohrabschnitts 13. Damit ist die Wechselbelastung des Klemmrings 9 stark verringert und gleichzeitig eine noch bessere Festlegung des Rohrs oder des Rohrabschnitts 13 erreicht. Die Kegelringhülse 10 ist weiterer Ausgestaltung aus Metall, beispielsweise Messing gefertigt. Insbesondere bei dieser Fertigung weist die Kegelringhülse den erwähnten Spalt und vorzugsweise drei auf dem Umfang der Kegelringhülse 10 verteilte biegeelastische Bereiche auf. Dadurch wird die Bewegung des Eingreifens in das Rohr oder der es Rohrabschnitts 13 erleichtert. Die Kegelringhülse 10 kann aber auch aus Kunststoff gefertigt sein. In diesem Fall weist sie nur einen Spalt auf, da Kunststoff genügend biegeelastisch ist , um die nötige Verformung beim Eingreifen in das Rohr zu ermöglichen.

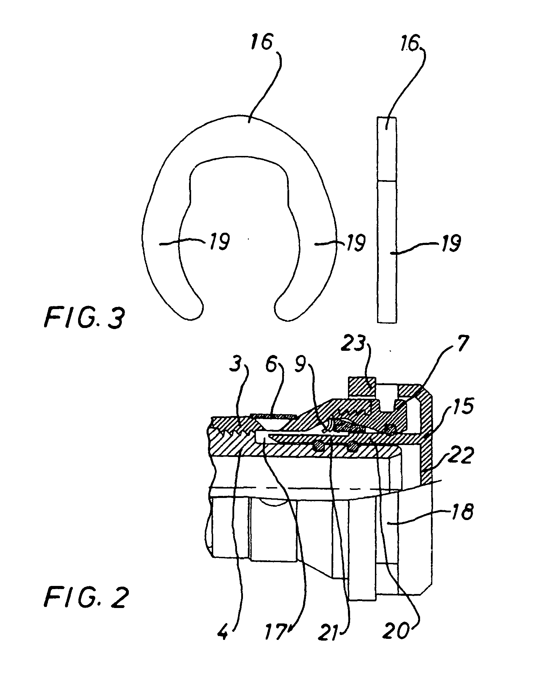

Gegenüberliegend zu der trapezförmigen Ausnehmung 8 weist der innere Rohrträger 2 zwei Ringnuten zum Einlegen von Runddichtringen 11a, 11b auf. In dem Spannring 7 ist ebenfalls eine Ringnut eingearbeitet, in die ein Runddichtring 11c eingesetzt ist. Auf dem äußeren Umfang weist der Spannring 7 eine Außennut 12 auf, die zum Befestigen einer in der Fig. 2 näher beschriebenen Schutzkappe 15 dient.

Der rechte Steckfitting ist - wie schon ausgeführt - als rechtwinkliger Bogenfitting zur Verbindung mit dem ersten Steckfitting ausgebildet. Dazu weist er auf der zu dem Einsteckbereich gegenüberliegenden Seite einen Anschlussbereich auf, der als Rohrabschnitt 13 ausgebildet ist. Dieser Rohrabschnitt 13 weist eine äußere Riffelung 14 auf. Dieser Rohrabschnitt 13 ist - wie zuvor ausgeführt - in den Einsteckbereich des zweiten Steckfittings eingeschoben. Die Riffelung 14 gewährleistet einen sicheren Halt der Haltezähne des Klemmrings 9.

Der in Fig. 2 dargestellte Einsteckbereich ist von einer Schutzkappe 15 verschlossen, wobei die Schutzkappe 15 mit einer in Fig. 3 dargestellten Halteklammer 16 an dem Spannring 7 - wie später erläutert wird - befestigt wird. Die Schutzkappe 15 weist ein Rohrteil 20 auf, das in den Ringraum 17 eingeschoben ist. Damit die Zähne des Klemmrings 9 nicht in das Rohrteil 20 eingreifen, weist das Rohrteil 20 einen im Durchmesser verringerten Abschnitt 21 auf, der etwa von der Mitte der Kegelringhülse 10 bis zu dem Mittelteil 4 weisenden Ende des Rohrteil 20 reicht. Auf der gegenüberliegenden Seite weist die Schutzkappe 15 einen Deckelbereich 22 auf, an den ein äußerer den Spannring 7 und einen Teil der Hülse 3 umfassenden topfförmiger Bereich 23 anschließt. Der topfförmige Bereich 23 weist zwei gegenüberliegende Längsausnehmungen 18 auf, die zu der Außenringnut 12 ausgerichtet sind. Durch diese Längsausnehmungen 18 greifen im montierten Zustand (Fig. 3) zwei Arme 19 der Halteklammer 16 hindurch in die Außenringnut 12 ein und sorgen für eine sichere Befestigung der Schutzkappe 15 an dem Steckfitting. Soll der Steckfitting montiert werden, wird die Halteklammer 16 entfernt und die Schutzkappe 15 abgenommen. Insbesondere das mit den Runddichtringen 11a, 11b, 11c zusammenwirkende Rohrteil 20 der Schutzkappe 15 gewährleistet, dass kein Schmutz in den Ringraum 17 gelangen kann.

### Bezugzeichenliste:

- 1: Grundkörper
- 2: Rohrträger
- 3: Hülse
- 4: Mittelteil
- 5: Kontrollöffnung
- 6: Schutzring
- 7: Spannring
- 8: Ausnehmung
- 9, 9a: Klemmring, Stützscheibe
- 10: Kegelringhülse
- 11a, 11b, 11c: Runddichtring
- 12: Außenringnut
- 13: Rohrabschnitt
- 14: Riffelung
- 15: Schutzkappe
- 16: Halteklammer
- 17: Ringraum
- 18: Längsausnehmung
- 19: Arm
- 20: Rohrteil
- 21: Abschnitt
- 22: Deckelbereich
- 23: Bereich

## Patentansprüche

1. Steckfitting mit einem Grundkörper und einer Schutzkappe, der anschließend an ein Mittelteil (4) einen Einsteckbereich aufweist, wobei der Einsteckbereich den Grundkörper (1) mit einem inneren Rohrträger (2) und eine mit dem Grundkörper (1) zusammenwirkende Hülse (3) aufweist, wobei der Rohrträger (2) und die Hülse (3) einen Ringraum (17) bilden, in den ein in der Hülse (3) von einem Spannring (7) gehaltener Klemmring (9) hineinragt,
**dadurch gekennzeichnet, dass** auf das von dem Mittelteil (4) wegweisende Ende des Einsteckbereichs eine Schutzkappe (15) aufsetzbar ist und dass die Schutzkappe (15) dichtend und kontaktfrei zu dem Klemmring (9) in den Ringraum (17) eingreift.

2. Steckfitting nach Anspruch 1,
**dadurch gekennzeichnet, dass** die Schutzkappe (15) mit einer Halteklammer (16) an dem Spannring (7) festlegbar ist.

3. Steckfitting nach Anspruch 1 oder 2,
**dadurch gekennzeichnet, dass** die Schutzkappe (15) zwei gegenüberliegende parallel zueinander verlaufende Längsausnehmungen (18) aufweist.

4. Steckfitting nach Anspruch 3,
**dadurch gekennzeichnet, dass** eine u-förmig ausgebildete Halteklammer (16) vorgesehen ist, deren gegenüberliegende Arme (19) in die Längsausnehmungen (18) einschiebbar sind und deren Arme (19) im eingeschobenen Zustand gleichzeitig in eine ringförmige Außenringnut (12) des Spannrings (7) eingreifen.

5. Steckfitting nach einem der vorherigen Ansprüche,
**dadurch gekennzeichnet, dass** der Steckfitting auf einer dem Einsteckbereich gegenüberliegenden Seite einen weiteren Einsteckbereich oder einen Anschlussbereich aufweist.

6. Steckfitting nach Anspruch 5,
**dadurch gekennzeichnet, dass** der Anschlussbereich einen mit dem Ringraum korrespondierenden Rohrabschnitt (13) aufweist.

7. Steckfitting nach Anspruch 6,
**dadurch gekennzeichnet, dass** der Rohrabschnitt (13) eine äußere Riffelung (14) aufweist.

8. Steckfitting nach Anspruch 5,
**dadurch gekennzeichnet, dass** der Anschlussbereich einen metallischen Anschlusskörper aufweist.

## Claims

1. Plug fitting having a basic body and a protective cap, which plug fitting has a plug-in region adjoining a central part (4), wherein the plug-in region comprises the basic body (1) with an inner pipe support (2) and a sleeve (3) cooperating with the basic body (1), wherein the pipe support (2) and the sleeve (3) form an annular space (17) into which a clamping ring (9) held in the sleeve (3) by a tensioning ring (7) projects, **characterized in that** a protective cap (15) can be fitted onto that end of the plug-in region facing away from the central part (4), and **in that** the protective cap (15) engages in the annular space (17) in a sealing manner and without contact with the clamping ring (9).

2. Plug fitting according to Claim 1, **characterized in that** the protective cap (15) can be fastened to the tensioning ring (7) by a retaining clip (16).

3. Plug fitting according to Claim 1 or 2, **characterized in that** the protective cap (15) has two longitudinal cutouts (18) extending opposite and parallel to one another.

4. Plug fitting according to Claim 3, **characterized in that** a u-shaped retaining clip (16) is provided whose opposite arms (19) can be inserted into the longitudinal cutouts (18) and whose arms (19), in the inserted state, simultaneously engage in a ring-shaped outer annular groove (12) of the tensioning ring (7).

5. Plug fitting according to one of the preceding claims, **characterized in that** the plug fitting has, on an opposite side to the plug-in region, a further plug-in region or a connecting region.

6. Plug fitting according to Claim 5, **characterized in that** the connecting region has a tubular portion (13) corresponding to the annular space.

7. Plug fitting according to Claim 6, **characterized in that** the tubular portion (13) has an external ribbing (14).

8. Plug fitting according to Claim 5, **characterized in that** the connecting region comprises a metallic connecting body.

## Revendications

1. Raccord à fiche avec un corps de base et une coiffe de protection, qui présente une zone enfichable à la suite d'une partie moyenne (4), dans lequel la zone enfichable présente le corps de base (1) avec un support tubulaire intérieur (2) et une douille (3) coopérant avec le corps de base (1), dans lequel le support tubulaire (2) et la douille (3) forment une chambre annulaire (17), dans laquelle pénètre une bague de serrage (9) maintenue dans la douille (3) par une bague de blocage (7), **caractérisé en ce qu'**une coiffe de protection (15) peut être posée sur l'extrémité de la zone enfichable située à l'opposé de la partie moyenne (4) et **en ce que** la coiffe de protection (15) s'engage dans la chambre annulaire (17) de façon étanche et sans contact avec la bague de serrage (9).

2. Raccord à fiche selon la revendication 1, **caractérisé en ce que** la coiffe de protection (15) peut être fixée sur la bague de blocage (7) avec un étrier de retenue (16).

3. Raccord à fiche selon la revendication 1 ou 2, **caractérisé en ce que** la coiffe de protection (15) présente deux évidements longitudinaux opposés (18) qui s'étendent parallèlement l'un à l'autre.

4. Raccord à fiche selon la revendication 3, **caractérisé en ce qu'**il est prévu un étrier de retenue (16) en forme de U, dont les bras opposés (19) peuvent être insérés dans les évidements longitudinaux (18) et dont les bras (19) s'engagent en même temps, à l'état inséré, dans une rainure annulaire extérieure (12) en forme d'anneau de la bague de blocage (7).

5. Raccord à fiche selon l'une quelconque des revendications précédentes, **caractérisé en ce que** le raccord à fiche présente, sur un côté opposé à la zone enfichable, une autre zone enfichable ou une zone de raccordement.

6. Raccord à fiche selon la revendication 5, **caractérisé en ce que** la zone de raccordement présente une partie tubulaire (13) correspondant à la chambre annulaire.

7. Raccord à fiche selon la revendication 6, **caractérisé en ce que** la partie tubulaire (13) présente un striage extérieur (14).

8. Raccord à fiche selon la revendication 5, **caractérisé en ce que** la zone de raccordement présente un corps de raccordement métallique.
